# EUROPEAN PATENT SPECIFICATION

(11) **EP 1 475 897 B1**
(45) Date of publication and mention of the grant of the patent: **14.04.2010**
(21) Application number: 04101956.3
(22) Date of filing: 06.05.2004
(51) Int. Cl.: H04B 1/69

(54) **UWB Apparatus**
UWB Vorrichtung
UWB appareil

(30) Priority: 07.05.2003 KR 2003029130
(43) Date of publication of application: 10.11.2004
(73) Proprietor: SAMSUNG ELECTRONICS CO., LTD., Suwon-si Gyeonggi-do 442-742 (KR)
(72) Inventor: YOU, Ho-jeong, Gyeonggi-do (KR); Kim, In-hwan, Yeongtong-gu, Suwon-si Gyeonggi-do (KR); Kim, Nam-hyong, Yeongtong-gu, Suwon-si Gyeonggi-do (KR)
(74) Representative: Read, Matthew Charles

(56) References cited:
- EP-A- 1 292 043
- EP-A- 1 398 882
- US-A- 5 677 927
- SOMAYAZULU V S ET AL INSTITUTE OF ELECTRICAL AND ELECTRONICS ENGINEERS: "Design challenges for very high data rate UWB systems" CONFERENCE RECORD OF THE 36TH. ASILOMAR CONFERENCE ON SIGNALS, SYSTEMS, & COMPUTERS. PACIFIC GROOVE, CA, NOV. 3 - 6, 2002, ASILOMAR CONFERENCE ON SIGNALS, SYSTEMS AND COMPUTERS, NEW YORK, NY : IEEE, US, vol. VOL. 1 OF 2. CONF. 36, 3 November 2002 (2002-11-03), pages 717-721, XP010638299 ISBN: 0-7803-7576-9
- MILLER T ET AL: "RFI SUPPRESSION FOR ULTRA WIDEBAND RADAR" IEEE TRANSACTIONS ON AEROSPACE AND ELECTRONIC SYSTEMS, IEEE INC. NEW YORK, US, vol. 33, no. 4, 1 October 1997 (1997-10-01), pages 1142-1156, XP000726070 ISSN: 0018-9251

## Description

The present invention relates to UWB communication apparatus comprising a front end having a receiver band stop means for selectively blocking sub-bands of the receive bandwidth of the apparatus, and control means and a method of configuring a UWB communication apparatus.

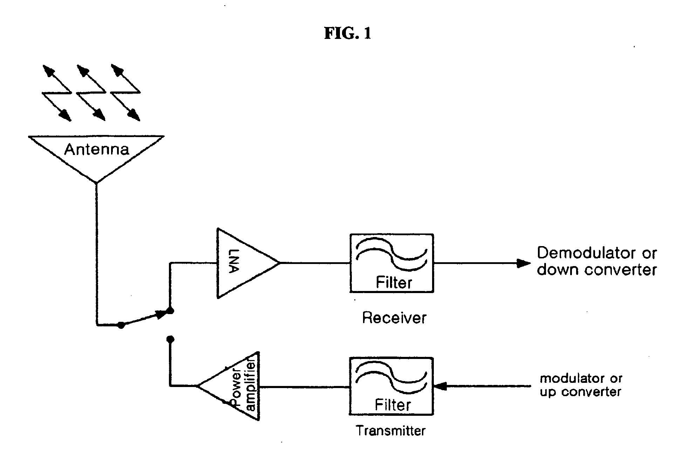

Figure 1 is a schematic diagram showing a radio frequency (RF) transceiver apparatus. As shown in Figure 1, a switch is provided to connect the antenna to a low-noise amplifier (LNA) for receiving signals and to a power amplifier for transmitting signals.

The output of the LNA is connected to a filter and the output of the filter is connected to a down-converter or a demodulator.

The input to the power amplifier is provided from an up-converter or a modulator via another filter.

Increasingly, wireless communication systems available for use in wireless local area networks (WLAN) and wireless personal area network (WPAN) require data transmission rates as high as those used in wired communication system. Such a need is met only if ultra wide band (UWB) techniques is used. UWB supports a data rate that is the highest among currently used WLAN or WPAN wireless communication systems. Since a bandwidth of, at most, 200 to 300 MHz is generally employed in such RF transceiver apparatuses, it is not particularly difficult to construct suitable LNAs, power amplifiers and filters. Furthermore, since a specific predetermined relatively narrow band is used, these systems rarely interfere with other systems.

However, several problems are encountered if UWB system, having a bandwidth of several hundred MHz or GHz, is used. An acute problem in using UWB is that is intrudes into frequency bands allocated to other services. This means that a malfunctioning UWB system may interfere with other services. Furthermore, it is difficult to design and build LNAs, power amplifiers, filters and the like, which have suitable bandwidths for use in UWB systems.

The use of notch filters to block interfering narrow band signals in a UWB receiver is disclosed in Somayazulu, V.S. et al., "Design Challenges for Very High Data Rate UWB Systems", Conference Record of the 36th Asilomar Conference on Signals, Systems and Computers, Pacific Groove, CA, Nov. 3-6, 2002, IEEE, US, vol. 1, Conf. 36, 3 Nov 2002, pp. 717-721.

EP 1 292 043 describes an ultra-wideband system and method for reducing the effects of narrowband interference.

A UWB communication apparatus, according to the present invention, is characterised by signal strength measurement means for measuring the signal strength after the receiver band stop means and the control means being configured to control the receiver band stop means in a first stage to block different sub-bands one by one while monitoring the output of the signal strength measurement means and control the receiver band stop means in a second stage to block a sub-band, the blocking of which produced a variation in measured signal strength greater than a predetermined value.

A method of configuring a UWB communication apparatus, according to the present invention, is characterised by controlling receiver band stop means in a first stage to block different sub-bands one by one while measuring the signal strength after the band stop means, and controlling the receiver band stop means in a second stage to block a sub-band, the blocking of which produced a variation in measured signal strength greater than a predetermined value.

A UWB signal will have a relatively flat power spectrum. Accordingly, in the absence of an interfering signal, substantially the same reduction, i.e. a proportionate reductions, in total received signal power will occur whichever sub-band is blocked. However, if there is a significant interfering signal, the power reduction will be disproportionate when the sub band containing the interfering signal is blocked.

The sub-bands may cover the whole of the UWB bandwidth or be tailored to likely interfering signals, e.g. GPS signal and IEEE 802.11 signals.

The receiver band stop means may comprises a plurality of selectively enablable receiver band stop filters arranged in series. However, it could be implemented using a tunable band-stop filter.

Preferably, each receiver band stop filter has switch means associated with it for opening and closing a by-pass path around the filter to thereby enable and disable the filter.

The receiver band stop means may also or alternatively comprise a plurality of selectively enablable relatively narrow band LNAs arranged in parallel.

The apparatus may include a transmitting means including transmitter band stop means for selectively blocking sub-bands of the transmit bandwidth of the apparatus, with the control means configured to control the transmitter band stop means to block a sub-band, the blocking of which in the front end produced a variation in measured signal strength greater than a predetermined value.

The transmitter band stop means comprises a plurality of selectively enablable transmitted band stop filters arranged in series, or a tunable band-stop filter.

Each transmitter band stop filter preferably has switch means associated with it for opening and closing a by-pass path around the filter to thereby enable and disable the filter.

The transmitter band stop means may also or alternatively comprise a plurality of selectively enablable relatively narrow band power amplifiers arranged in parallel. Preferably, the control means is configured to report blocked sub-bands to other apparatuses using radio communication, e.g. in a packet header.

An embodiment of the present application will now be described, by way of example, with reference to Figures 2 to 7 of the accompanying drawings, in which:
Figure 1 is a schematic diagram showing the configuration of a conventional RF transceiver;
Figure 2 is a block diagram illustrating the configuration of a first UWB transceiver apparatus according to the present invention;
Figure 3 is a schematic diagram showing the structure of a baseband controller;
Figure 4 is a block diagram illustrating the configuration of a second UWB transceiver apparatus according to the present invention;
Figure 5 is a flowchart illustrating a technique for dynamically determining a frequency band to be unused in a UWB transceiver;
Figure 6 is a flowchart illustrating a technique for dynamically determining a frequency band to be unused in a UWB transceiver; and
Figure 7 is a flowchart illustrating a technique for determining a frequency band to be unused and transceiving signals between UWB systems.

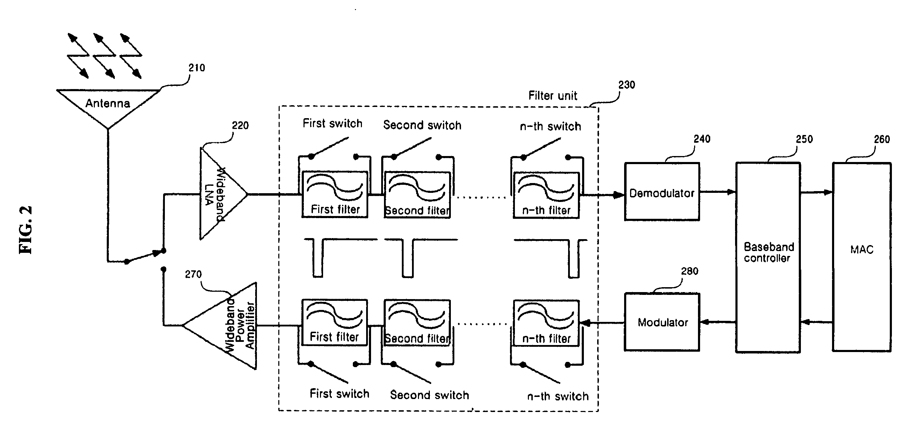

Referring to Figure 2, a first UWB transceiver apparatus includes a filter unit 230 having a plurality of filters, having respective stop-bands. The UWB transceiver also has a wideband LNA 220, a wideband power amplifier 270, a demodulator 240, a modulator 280, a baseband controller 250 and a medium access controller (MAC) 260.

The LNA 220 is a typical small signal amplifier with a bandwidth sufficient for the UWB system's signals.

Each of the filters is a band stop filter for selectively filtering out respective sub-bands of the band used by the UWB system. If another service is operating near the UWB system, the UWB system can be excluded from the frequency band used by the other service to prevent mutual interference. The receiver band-stop filters can be used to block interfering signals from the other service and the transmitter band-stop filters can be used to prevent the UWB system interfering with the other service.

Each band-stop filter has an associated by-pass switch. The switches are opened to make the respective filters effective and closed to allow signals to by-pass the respective filters. In this way, the band stop filtering can be controlled dynamically to cope prevent interference due to newly operating other services. For example, the filters may be arranged according to the frequency bands used in existing wireless communication systems such as the global positioning system (GPS) band and the 5 GHz wireless LAN band.

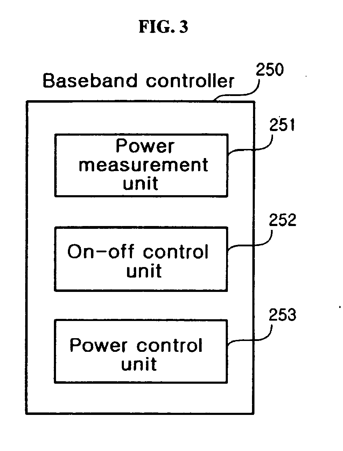

The baseband controller 250 serves to control the processing of signals for transmission and received signals. Referring to Figure 3, the baseband controller 250 comprises a power measurement unit 251, an on-off control unit 252 and a power control unit 253.

The MAC 260 is operated in a protocol stack layer above the physical layer and serves to manage data communication according to the implemented UWB communication protocol. The MAC 260 receives received digital signals from the baseband controller and transfers outgoing digital signals to the baseband controller. The demodulator 240 demodulates the received UWB signals received through the antenna. The modulator 280 modulates a carrier with the baseband digital data from the baseband controller 250. The power amplifier 270 amplifies the modulated UWB signal, received from the modulator 280 via the filter unit 230.

On the receiving side of the apparatus, the order of the filter unit 230 and LNA 220 may be swapped so that the filter unit 230 precedes the LNA 220. In case of a heterodyne or direct conversion system, the signals are down-converted to baseband and demodulated. In the case of a baseband system, the received signals are directly demodulated.

In the transmitting side of the apparatus, the filter unit 230 and power amplifier 270 may also be swapped with the filter unit 230 then coming after the power amplifier 270. The baseband signals may be up-converted to the band around the carrier frequency. The up-converted RF signals have a band that is to be sent to a specific band space. In a system where a carrier is not used, the modulated signals are directly sent to the filter without performing the up-conversion process.

Referring again to Figure 3, in order to detect interfering signals, the power measurement unit 251 of the baseband controller 250 measures the received signal power while enabling each of the receive filter of the filter unit 230 in turn. If there is power variation greater than a predetermined value when a particular filter is enabled, the power measurement unit 251 determines that another wireless communication system is using the corresponding band.

The on-off control unit 252 controls the filter by-pass switches. More specifically, the on-off control unit 252 can dynamically close and open the switches to control the band stopping profile of the filter unit, for transmit and receive, to exclude UWB signals from the band or bands used by the other wireless communication system.

The power control unit 253 controls the transmission power of the UWB signals according to the signal-to-noise ratio (SNR) of the received signals. Since the respective components of the baseband controller 250 operate independently of one another, additional components may be added, depending on the data transmission method or only some of the components shown in Figure 3 may be included. For example, the baseband controller 250 may be comprised of only the power measurement unit 251 and the on-off control unit 252. If there is an additional need to control the transmission power, the power control unit 253 may be added to the baseband controller 250.

A second UWB transceiver apparatus includes a LNA unit with a plurality of LNAs and a power amplifier unit with a plurality of power amplifiers. Only the parts different from the first UWB transceiver apparatus shown, in Figure 2, will be described below.

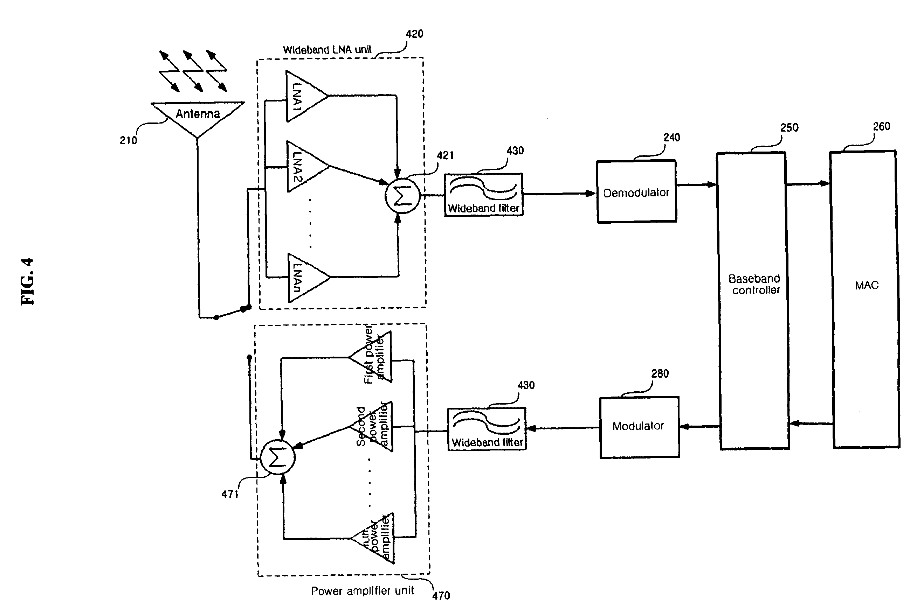

Referring to Figure 4, the second UWB transceiver apparatus comprises a LNA unit 420 with a plurality of LNAs, a power amplifier unit 470 with a plurality of power amplifiers, a wideband filter 430, a demodulator 240, a modulator 280, a baseband controller 250 and a MAC 260. The LNA unit 420 includes a plurality of LNAs and a LNA combiner 421 for combining the outputs of all of the LNAs.

The power amplifier unit 470 includes a plurality of power amplifiers and a power amplifier combiner 471 for combining the outputs of all of the power amplifiers.

The bandwidth of the wideband filter 430 is sufficient to pass all of the UWB system's signals.

The LNAs and power amplifiers may be selectively disabled to prevent mutual interference between the UWB system and another service. For example, the LNAs and power amplifiers may be arranged to have bandwidths corresponding to the bands used by other radio services such as the global positioning system (GPS) band and the 5 GHz wireless LAN band.

In this embodiment, the on-off control unit 252 serves to enable and disable LNAs and power amplifiers in dependence on the measurements made by the power measurement unit 251 so as to exclude the UWB system from bands occupied by other services and to block reception of signals belonging to other services.

A third apparatus combines features from the first and second apparatuses shown in Figures 2 and 4. In such a combined apparatus, there may be a filter unit 230 with a plurality of band-stop filters, a plurality of LNAs and a plurality of power amplifiers. Alternatively, the receive side may use a plurality of LNAs and a wideband filter and the transmit side, a single power amplifier and a filter unit comprising a plurality of band-stop filters.

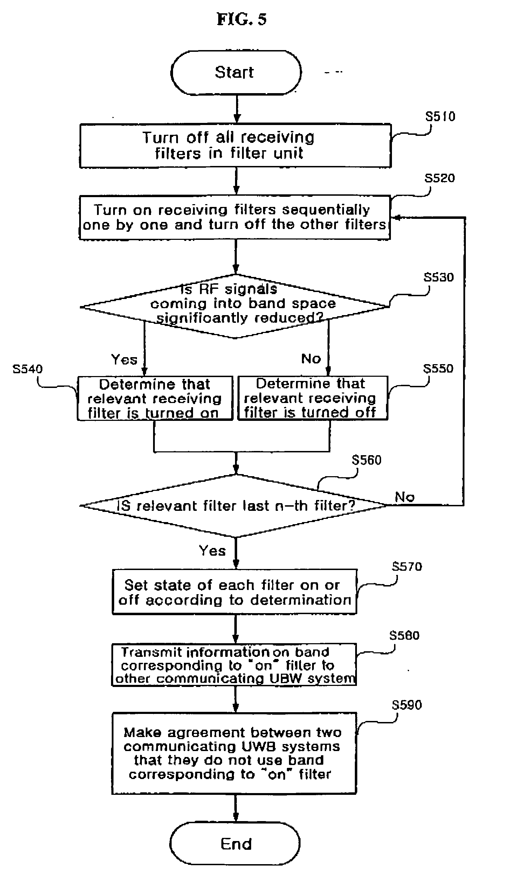

Figure 5 is a flowchart illustrating a technique for dynamically determining a frequency band that is not to be used by the first UWB transceiver apparatus. The steps in the flowchart of Figure 5 are performed at regular intervals and/or when the UWB transceiver apparatus is turned on. First, all the filters shown in Figure 2 are disabled (S510). Then, one of the filters is enabled and the remaining filters remain disabled. Next, the next filter is enabled and the other filters disabled. This process is performed for all the filters (S520).

Through the above processes, it is possible to determine the bands, if any, in which there are interfering signals. For example, where the second filter covers the 5GHz wireless LAN band and being used by another apparatus for wireless networking, the first to n-th filters are sequentially enabled one by one at a regular intervals of time and/or when the UWB transceiver apparatus is turned on. Then, the total intensity of the RF signals coming into the band space will be significantly lowered when the second filter is turned on. Therefore, the UWB system can perceive the presence of the 5GHz wireless LAN signals through the above process.

Generally speaking, if the power of the RF signals entering the band space is significantly reduced when a specific band stop filter is energised (S530), it is determined that the filter for use in the band is enabled (S540). Otherwise, it is determined that the relevant filter is disabled (S550). Subsequently, it is checked whether the relevant filter is the last n-th filter (S560). If so, the process goes to next step S570. Otherwise, the process returns to step S520. According to the determined result, the UWB transceiver apparatus enables only the filters which cover bands where potentially interfering signals are present (S570). Thus, the UWB board will not be damaged even though higher power is input through the interference band.

Further, information on the relevant band so determined is transmitted to a communicating UWB transceiver apparatus (S580). The two UWB transceiver apparatuses make a mutual agreement that they will not use the relevant band (S590). A method of making an agreement between the two UWB transceiver apparatuses that they will not use a specific band for mutual communication may include a method of producing a management frame in the MAC and transceiving the frame between the apparatuses. Alternately, this information can be included in a physical layer header and communicated to each other during the wireless data transmission/reception. In such a case, a new frame may be produced, or "reserved bits" of the existing frame may be used.

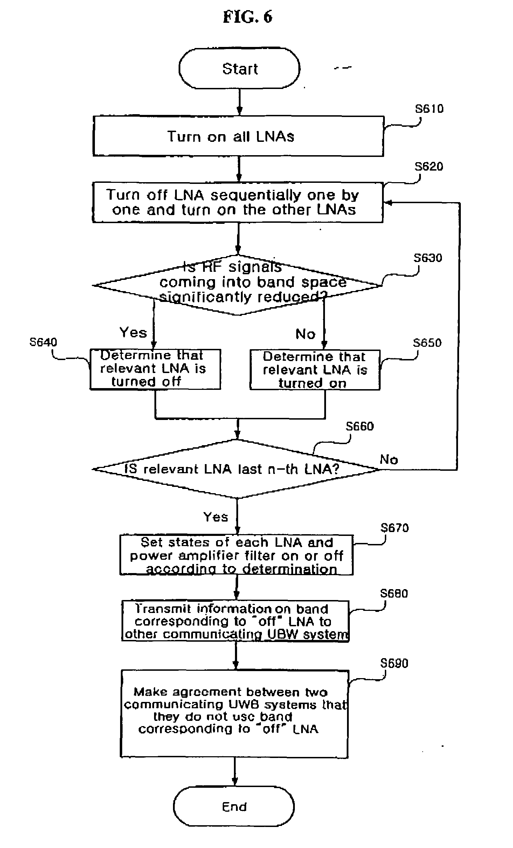

Figure 6 is a flowchart illustrating an exemplary technique for dynamically determining a frequency band that is not to be used in the UWB transceiver apparatus including a plurality of LNAs and a plurality of power amplifiers. The steps in the flowchart of Figure 6 are performed at a regular interval of time or when the UWB transceiver apparatus is turned on. First, all the filters shown in Figure 4 are turned on (S610). Then, one of the filters is turned off and the remaining filters remain turned on. Next, the next filter is turned off and the other filters are turned on. This process is performed for all the filters (S620). Through the above processes, it is possible to determine as to which bands the interferences occur.

As such, if the power of the RF signals entering the band space is significantly reduced when a specific LNA is turned off (S630), it is determined that the LNA for use in the band is turned off (S640). Otherwise, it is determined that the relevant filter and power amplifier are turned on (S650). Subsequently, it is checked whether the relevant LNA is the last n-th LNA (S660). If so, the process goes to step S670. Otherwise, the process returns to step S620. According to the determined result, the UWB transceiver apparatus turns off only the relevant LNA for use in the interference band and turns on the other LNAs (S670). Further, information on the relevant band so determined is transmitted to a communicating UWB transceiver apparatus (S680), and then, the two UWB transceiver apparatuses make a mutual agreement that they will not use the relevant band (S690).

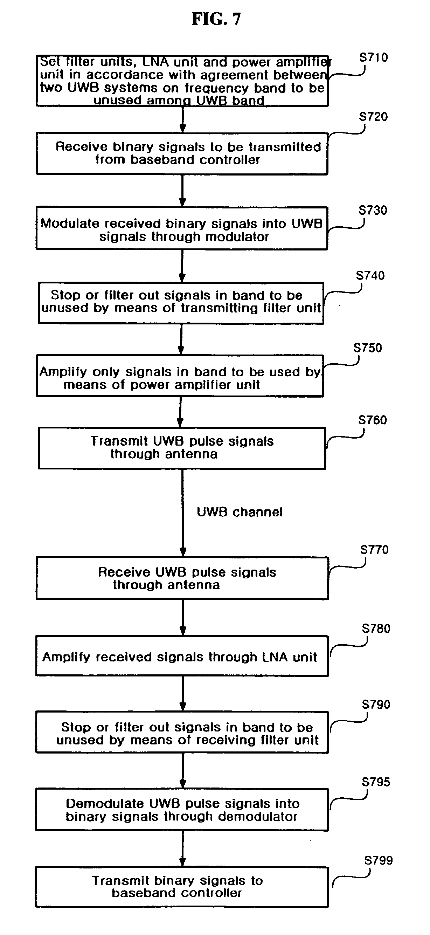

Figure 7 is a flowchart illustrating a process of determining a frequency band not to be used and transceiving signals between the UWB systems where a plurality of filters, LNAs and power amplifiers are all used. First, the filter unit, the LNA unit and the power amplifier unit are set on the basis of the agreement process as described in the embodiment shown in Figure 5 or Figure 6 (S710). Then, the modulator of the first UWB transceiver apparatus receives binary signals to be transmitted from the baseband controller (S720). Next, the received binary signals are modulated into UWB pulse signals through the modulator (S730).

Where a carrier is used, the signals should first pass through a down converter and be then subject to the modulation process. Otherwise, the signals are directly transmitted to the modulator. The modulated signals pass through the filter unit on the transmitting side of the UWB system, in which the signals in the band to be unused are filtered out or stopped (S740). Thereafter, only the signals in the band to be used are amplified through the power amplifier unit (S750), and the UWB pulse signals are then transmitted through the antenna (S760).

The transmitted signals are propagated through the UWB channel in the air and are received through the antenna of the second UWB transceiver apparatus (S770). Then, the received signals are amplified by passing through the LNA unit (S780), and the signals in the band not to be used are filtered out or stopped through the filter unit on the receiving side of the UWB system (S790). Only the filtered pulse signals are demodulated into binary signals (S795). Where a carrier is used, the pulse signals should pass through the filter unit and then be transmitted to the down converter. Where a carrier is not used, the pulse signals are directly sent to the demodulator. The binary signals having passed through the demodulator are transmitted to the baseband controller (S799).

## Claims

1. A UWB communication apparatus comprising a front end (220, 230; 420, 430) having a receiver band stop means (230; 420) for selectively blocking sub-bands of the receive bandwidth of the apparatus, and control means (250), **characterised by** signal strength measurement means (251) for measuring the signal strength after the receiver band stop means (230; 420) and the control means (250) being configured to control the receiver band stop means (230; 420) in a first stage to block different sub-bands one by one while monitoring the output of the signal strength measurement means (251) and control the receiver band stop means (230; 420) in a second stage to block a sub-band, the blocking of which produced a variation in measured signal strength greater than a predetermined value.

2. An apparatus according to claim 1, wherein the receiver band stop means (230) comprises a plurality of selectively enablable receiver band stop filters arranged in series.

3. An apparatus according to claim 2, wherein each receiver band stop filter has switch means associated with it for opening and closing a by-pass path around the filter to thereby enable and disable the filter.

4. An apparatus according to claim 1, 2 or 3, wherein the receiver band stop means (420) comprises a plurality of selectively enablable relatively narrow band LNAs arranged in parallel.

5. An apparatus according to any preceding claim, including a transmitting means including transmitter band stop means (230; 470) for selectively blocking sub-bands of the transmit bandwidth of the apparatus, wherein the control means (250) is configured to control the transmitter band stop means (230; 420) to block a sub-band, the blocking of which in the front end (220, 230) produced a variation in measured signal strength greater than a predetermined value.

6. An apparatus according to claim 5, wherein the transmitter band stop means (230) comprises a plurality of selectively enablable transmitter band stop filters arranged in series.

7. An apparatus according to claim 6, wherein each transmitter band stop filter has switch means associated with it for opening and closing a by-pass path around the filter to thereby enable and disable the filter.

8. An apparatus according to claim 5, 6 or 7, wherein the transmitter band stop means (470) comprises a plurality of selectively enablable relatively narrow band power amplifiers arranged in parallel.

9. An apparatus according to any preceding claim, wherein the control means (250) is configured to report blocked sub-bands to other apparatuses using radio communication.

10. An apparatus according to claim 9, wherein the block sub-bands are reported in a packet header.

11. An apparatus according to claim 9, wherein blocked sub-bands are reported in the MAC layer of a protocol stack implemented by the apparatus.

12. An apparatus according to claim 11, wherein blocked sub-bands are reported in a management frame.

13. An apparatus according to claim 10, wherein said packet header is a physical layer header.

14. A method of configuring a UWB communication apparatus, **characterised by**:
controlling receiver band stop means (230; 420), in a first stage, to block different sub-bands one by one while measuring the signal strength after the band stop means (230; 420), and
controlling the receiver band stop means (230, 420), in a second stage, to block a sub-band, the blocking of which produced a variation in measured signal strength greater than a predetermined value.

15. A method according to claim 14, wherein controlling the receiver band stop means (230; 420) to block a sub-band comprises enabling one of a plurality of band stop filters arranged in series.

16. A method according to claim 15, wherein a band stop filter is disabled by operating switch means associated with it to close a by-pass path around the filter.

17. A method according to claim 14, 15 or 16, wherein controlling the receiver band stop means (230; 420) to block a sub-band comprises disabling one of a plurality of relatively narrow band LNAs arranged in parallel.

18. A method according to any one of claims 14 to 17, including controlling transmitter band stop means (230; 420) to block a sub-band, the blocking of which produced a variation in measured signal strength greater than a predetermined value.

19. A method according to claim 16, wherein controlling the transmitter band stop means (230; 420) to block a sub-band comprises disabling one of a plurality of transmitter band stop filters arranged in series.

20. A method according to claim 19, wherein disabling one of said transmitter band stop filters comprises closing switch means associated with it to close a by-pass path around the filter.

21. A method according to claim 18, 19 or 20, wherein controlling the transmitter band stop means (230; 420) to block a sub-band comprises disabling one of a plurality of relatively narrow band power amplifiers arranged in parallel.

22. A method according to any one of claims 14 to 21, comprising reporting blocked sub-bands to other apparatuses using radio communication.

23. A method according to claim 22, wherein the block sub-bands are reported in a packet header.

24. A method according to claim 22, wherein blocked sub-bands arc reporter in the MAC layer of a protocol stack.

25. A method according to claim 24, wherein blocked sub-bands are reported in a management frame.

26. A method according to claim 23, wherein said packet header is a physical layer header.

## Patentansprüche

1. UWB-Kommunikationsvorrichtung, umfassend eine Eingangsstufe (220, 230; 420, 430) mit einem Empfänger-Bandsperrmittel (230; 420) zum selektiven Blockieren von Teilbändern der Empfangsbandbreite der Vorrichtung und Steuermittel (250), **gekennzeichnet durch** Signalstärke-Messmittel (251) zum Messen der Signalstärke hinter dem Empfänger-Bandsperrmittel (230; 420) und dem Steuermittel (250), konfiguriert zum Steuern des Empfänger-Bandsperrmittels (230; 420) in einer ersten Stufe, um verschiedene Teilbänder eines nach dem anderen zu blockieren, während der Ausgang des Signalstärke-Messmittels (251) überwacht wird, und Steuern des Empfänger-Bandsperrmittels (230; 420) in einer zweiten Stufe, um ein Teilband zu blockieren, dessen Blockierung eine Änderung der gemessenen Signalstärke erzeugte, die größer als ein im Voraus bestimmter Wert ist.

2. Vorrichtung nach Anspruch 1, wobei das Empfänger-Bandsperrmittel (230) eine Vielzahl von selektiv aktivierbaren Empfänger-Bandsperrfiltern umfasst, die in Reihenschaltung angeordnet sind.

3. Vorrichtung nach Anspruch 2, wobei jeder Empfänger-Bandsperrfilter damit assoziierte Schaltermittel zum Öffnen und Schließen eines Umgehungswegs um den Filter aufweist, um den Filter **dadurch** zu aktivieren und zu deaktivieren.

4. Vorrichtung nach Anspruch 1, 2 oder 3, wobei das Empfänger-Bandsperrmittel (420) eine Vielzahl von selektiv aktivierbaren, relativ schmalbandigen LNAs (rauscharmer Verstärker) umfasst, die in Parallelschaltung angeordnet sind.

5. Vorrichtung nach einem der vorstehenden Ansprüche, enthaltend ein Übertragungsmittel, das Sender-Bandsperrmittel (230; 470) zum selektiven Blockieren von Teilbändern der Übertragungsbandbreite der Vorrichtung enthält, wobei das Steuermittel (250) konfiguriert ist, um das Sender-Bandsperrmittel (230;420) zu steuern, um ein Teilband zu blockieren, dessen Blockierung in der Eingangsstufe (220, 230) eine Änderung der gemessenen Signalstärke erzeugte, die größer als ein im Voraus bestimmter Wert ist.

6. Vorrichtung nach Anspruch 5, wobei das Sender-Bandsperrmittel (230) eine Vielzahl von selektiv aktivierbaren Sender-Bandsperrfiltern umfasst, die in Reihenschaltung angeordnet sind.

7. Vorrichtung nach Anspruch 6, wobei jeder Sender-Bandsperrfilter damit assoziierte Schaltermittel zum Öffnen und Schließen eines Umgehungswegs um den Filter aufweist, um den Filter **dadurch** zu aktivieren und zu deaktivieren.

8. Vorrichtung nach Anspruch 5, 6 oder 7, wobei das Sender-Bandsperrmittel (470) eine Vielzahl von selektiv aktivierbaren, relativ schmalbandigen Leistungsverstärkern umfasst, die in Parallelschaltung angeordnet sind.

9. Vorrichtung nach einem der vorstehenden Ansprüche, wobei das Steuermittel (250) konfiguriert ist, um blockierte Teilbänder unter Verwendung von Funkkommunikation an andere Vorrichtungen zu berichten.

10. Vorrichtung nach Anspruch 9, wobei die blockierten Teilbänder in einem Paketkopf berichtet werden.

11. Vorrichtung nach Anspruch 9, wobei blockierte Teilbänder in der MAC-Schicht eines von der Vorrichtung implementierten Protokollprofils berichtet werden.

12. Vorrichtung nach Anspruch 11, wobei blockierte Teilbänder in einem Verwaltungsrahmen berichtet werden.

13. Vorrichtung nach Anspruch 10, wobei der Paketkopf ein Kopf einer physikalischen Schicht ist.

14. Verfahren zum Konfigurieren einer UWB-Kommunikationsvorrichtung, **gekennzeichnet durch**:
Steuern eines Empfänger-Bandsperrmittels (230; 420) in einer ersten Stufe, um verschiedene Teilbänder eines nach dem anderen zu blockieren, während die Signalstärke hinter dem Bandsperrmittel (230; 420) gemessen wird, und
Steuern des Empfänger-Bandsperrmittels (230; 420) in einer zweiten Stufe, um ein Teilband zu blockieren, dessen Blockierung eine Änderung der gemessenen Signalstärke erzeugte, die größer als ein im Voraus bestimmter Wert ist.

15. Verfahren nach Anspruch 14, wobei Steuern des Empfänger-Bandsperrmittels (230; 420) zum Blockieren eines Teilbands umfasst, einen einer Vielzahl von in Reihenschaltung angeordneten Bandsperrfiltern zu aktivieren.

16. Verfahren nach Anspruch 15, wobei ein Bandsperrfilter durch Betätigen eines damit assoziierten Schaltermittels deaktiviert wird, um einen Umgehungsweg um den Filter zu schließen.

17. Verfahren nach Anspruch 14, 15 oder 16, wobei Steuern des Empfänger-Bandsperrmittels (230; 420) zum Blockieren eines Teilbands umfasst, einen einer Vielzahl von in Parallelschaltung angeordneten relativ schmalbandigen LNAs zu deaktivieren.

18. Verfahren nach einem der Ansprüche 14 bis 17, Steuern eines Sender-Bandsperrmittels (230; 420) zum Blockieren eines Teilbands enthaltend, dessen Blockierung eine Änderung der gemessenen Signalstärke erzeugte, die größer als ein im Voraus bestimmter Wert ist.

19. Verfahren nach Anspruch 16, wobei Steuern des Sender-Bandsperrmittels (230; 420) zum Blockieren eines Teilbands umfasst, einen einer Vielzahl von in Reihenschaltung angeordneten Sender-Bandsperrfiltern zu deaktivieren.

20. Verfahren nach Anspruch 19, wobei Deaktivieren eines der Sender-Bandsperrfilter umfasst, damit assoziierte Schaltermittel zu schließen, um einen Umgehungsweg um den Filter zu schließen.

21. Verfahren nach Anspruch 18, 19 oder 20, wobei Steuern des Sender-Bandsperrmittels (230; 420) zum Blockieren eines Teilbands umfasst, einen einer Vielzahl von in Parallelschaltung angeordneten relativ schmalbandigen Leistungsverstärkern zu deaktivieren.

22. Verfahren nach einem der Ansprüche 14 bis 21, umfassend, blockierte Teilbänder an andere Vorrichtungen unter Verwendung von Funkkommunikation zu berichten.

23. Verfahren nach Anspruch 22, wobei die blockierten Teilbänder in einem Paketkopf berichtet werden.

24. Verfahren nach Anspruch 22, wobei blockierte Teilbänder in der MAC-Schicht eines Protokollprofils berichtet werden.

25. Verfahren nach Anspruch 24, wobei blockierte Teilbänder in einem Verwaltungsrahmen berichtet werden.

26. Verfahren nach Anspruch 23, wobei der Paketkopf ein Kopf einer physikalischen Schicht ist.

## Revendications

1. Appareil de communication à ultra large bande (UWB) comprenant une tête radiofréquence (220, 230 ; 420, 430) ayant un moyen d'arrêt de bandes de récepteur (230 ; 420) pour bloquer sélectivement des sous-bandes de la largeur de bande de réception de l'appareil, et un moyen de commande (250), **caractérisé par** un moyen de mesure de force de signal (251) pour mesurer la force du signal après le moyen d'arrêt de bandes de récepteur (230 ; 420) et le moyen de commande (250) étant configuré pour commander le moyen d'arrêt de bandes de récepteur (230 ; 420) dans un premier étage pour bloquer différentes sous-bandes une par une tout en surveillant la sortie du moyen de mesure de force de signal (251) et commander le moyen d'arrêt de bandes de récepteur (230 ; 420) dans un second étage pour bloquer une sous-bande donc le blocage a produit une variation de la force de signal mesurée supérieure à une valeur prédéterminée.

2. Appareil selon la revendication 1, dans lequel le moyen d'arrêt de bandes de récepteur (230) comprend une pluralité de filtres d'arrêt de bande de récepteur actionnables sélectivement agencés en série.

3. Appareil selon la revendication 2, dans lequel à chaque filtre d'arrêt de bandes de récepteur est associé un moyen de commutation pour ouvrir et fermer un chemin de dérivation autour du filtre pour ainsi activer et désactiver le filtre.

4. Appareil selon la revendication 1, 2 ou 3, dans lequel le moyen d'arrêt de bandes de récepteur (420) comprend une pluralité d'amplificateurs à faible bruit (LNA) à bande relativement étroite actionnables sélectivement agencés en parallèle.

5. Appareil selon l'une quelconque des revendications précédentes, comportant un moyen émetteur comportant un moyen d'arrêt de bandes d'émetteur (230 ; 470) pour bloquer sélectivement des sous-bandes de la largeur de bande d'émission de l'appareil, le moyen de commande (250) étant configuré pour commander le moyen d'arrêt de bandes d'émetteur (230 ; 420) pour bloquer une sous-bande dont le blocage dans la tête radiofréquence (220, 230) a produit une variation de la force de signal mesurée supérieure à une valeur prédéterminée.

6. Appareil selon la revendication 5, dans lequel le moyen d'arrêt de bandes d'émetteur (230) comprend une pluralité de filtres d'arrêt de bandes d'émetteur actionnables sélectivement agencés en série.

7. Appareil selon la revendication 6, dans lequel chaque filtre d'arrêt de bandes d'émetteur comporte un moyen de commutation qui lui est associé pour ouvrir et fermer un chemin de dérivation autour du filtre pour ainsi activer et désactiver le filtre.

8. Appareil selon la revendication 5, 6 ou 7, dans lequel le moyen d'arrêt de bandes d'émetteur (470) comprend une pluralité d'amplificateurs de puissance à bande relativement étroite actionnables sélectivement agencés en parallèle.

9. Appareil selon l'une quelconque des revendications précédentes, dans lequel le moyen de commande (250) est configuré pour signaler des sous-bandes bloquées à d'autres appareils utilisant les communications radio.

10. Appareil selon la revendication 9, dans lequel les sous-bandes bloquées sont signalées dans un en-tête de paquet.

11. Appareil selon la revendication 9, dans lequel les sous-bandes bloquées sont signalées dans la couche MAC d'une pile de protocole mise en oeuvre par l'appareil.

12. Appareil selon la revendication 11, dans lequel les sous-bandes bloquées sont signalées dans une trame de gestion.

13. Appareil selon la revendication 10, dans lequel ledit en-tête de paquet est un en-tête de couche physique.

14. Procédé de configuration d'un appareil de communication UWB, **caractérisé par** :
la commande d'un moyen d'arrêt de bandes de récepteur (230 ; 420), dans un premier étage, pour bloquer sélectivement des sous-bandes différentes une à la fois tout en mesurant la force de signal après le moyen d'arrêt de bandes (230 ; 420), et
la commande du moyen d'arrêt de bandes de récepteur (230 ; 420), dans un second étage, pour bloquer une sous-bande dont le blocage a produit une variation de la force de signal mesurée supérieure à une valeur prédéterminée.

15. Procédé selon la revendication 14, dans lequel la commande du moyen d'arrêt de bandes de récepteur (230 ; 420) pour bloquer une sous-bande comprend l'activation de l'un d'une pluralité de filtres d'arrêt de bandes agencés en série.

16. Procédé selon la revendication 15, dans lequel un filtre d'arrêt de bande est désactivé en actionnant un moyen de commutation qui lui est associé pour fermer un chemin de dérivation autour du filtre.

17. Procédé selon la revendication 14, 15 ou 16, dans lequel la commande du moyen d'arrêt de bandes de récepteur (230 ; 420) pour bloquer une sous-bande comprend la désactivation de l'un d'une pluralité d'amplificateurs LNA à bande relativement étroite agencés en parallèle.

18. Procédé selon l'une quelconque des revendications 14 à 17, comportant la commande d'un moyen d'arrêt de bandes d'émetteur (230 ; 420) pour bloquer une sous-bande dont le blocage a produit une variation de la force de signal mesurée supérieure à une valeur prédéterminée.

19. Procédé selon la revendication 16, dans lequel la commande du moyen d'arrêt de bandes d'émetteur (230 ; 420) pour bloquer une sous-bande comprend la désactivation de l'un d'une pluralité de filtres d'arrêt de bandes d'émetteur agencés en série.

20. Procédé selon la revendication 19, dans lequel la désactivation de l'un desdits filtres d'arrêt de bandes d'émetteur comprend la fermeture d'un moyen de commutation qui lui est associé pour fermer un chemin de dérivation autour du filtre .

21. Procédé selon la revendication 18, 19 ou 20, dans lequel la commande du moyen d'arrêt de bandes d'émetteur (230 ; 420) pour bloquer une sous-bande comprend la désactivation de l'un d'une pluralité d'amplificateurs de puissance à bande relativement étroite agencés en parallèle.

22. Procédé selon l'une quelconque des revendications 14 à 21, comprenant la signalisation des sous-bandes bloquées à d'autres appareils utilisant les communications radio.

23. Procédé selon la revendication 22, dans lequel les sous-bandes bloquées sont signalées dans en un en-tête de paquet.

24. Procédé selon la revendication 22, dans lequel les sous-bandes bloquées sont signalées dans la couche MAC d'une pile de protocole.

25. Procédé selon la revendication 24, dans lequel les sous-bandes bloquées sont signalées dans une trame de gestion.

26. Procédé selon la revendication 23, dans lequel ledit en-tête de paquet est un en-tête de couche physique.
